# EUROPEAN PATENT APPLICATION

(11) **EP 1 583 363 A1**
(43) Date of publication of application: **05.10.2005**
(21) Application number: 04007779.4
(22) Date of filing: 31.03.2004
(51) Int. Cl.: H04N 5/765

(54) **Portable mulitmedia electronic device**

(71) Applicant: EECS Technology Co., Ltd., Taipei Country 235 (TW)
(72) Inventor: Chen, Jui-Ming, Jhonghe City Taipei Country 235 (TW)
(74) Representative: Casalonga, Axel

(57) **Abstract**

A portable audio video electronic recording, storage and playback device. A user can store their music or movies and view them on the built-in color display or on a television. Video can be recorded and stored from any video source. Digital photographs or video can be captured via a built-in camera. A built-in TV tuner provides viewing and recording of television programming. Music can also be recorded from a stereo or computer and played back anytime and anywhere. The audio can be listened to with headphones, with the built-in speaker, or by connecting the device to a stereo. An image viewer allows digital photos to be stored and viewed on the device. Images can be easily transferred between the device, digital cameras and computers. A hard disc drive and memory card port are provided for storing data. An infrared port provides remote control and wireless connectivity.

## Description

### BACKGROUND OF THE INVENTION

### Field of the Invention

The present invention relates to a multimedia device. More specifically, the present invention discloses a portable audio video electronic device which records, stores and plays music, movies, and images.

### Description of the Prior Art

Currently, electronic products are becoming more and more sophisticated. Previous technologies such as video-tape machines are becoming obsolete due to the impracticality and inefficiency of the storage medium. Since the data is stored in a linear fashion, moving to view or listen to a desired section of the tape is slow and time consuming.

Also, new technologies such as video compact disc (VCD) players, only provide playback of purchased pre-recorded material. This type of device does not allow the user to personalize their multimedia experience by recording the audio video material that they wish to view or listen to.

Additionally, these devices are intended for home use or use in one location. Due to their size, it is impractical for a user to take the device to another location for use.

Furthermore, these devices require an extra monitor or display in order to view the video data.

Therefore, there is a need for a portable audio video electronic device which conveniently records, stores, and plays music, movies, and images and is small enough to be easily transported for mobile use.

### SUMMARY OF THE INVENTION

To achieve these and other advantages and in order to overcome the disadvantages of the conventional method in accordance with the purpose of the invention as embodied and broadly described herein, the present invention provides a portable audio video electronic device which records, stores, and plays music, movies, and images.

The portable audio video electronic device of the present invention provides a mobile multimedia or cinema to go recording, storage and playback device. A user can record and store their favorite movies and view them on the included color display.

Alternatively, the device can be connected to a standard television for viewing. The portable audio video electronic device provides standard audio and video inputs and outputs so that the device can be connected to any type of TV such as, for example, a phase alternation line (PAL), a national television systems committee (NTSC), or a sequential couleur avec memoire (SECAM) type TV.

Video can be recorded and stored from any video source such as, for example, television (TV), digital video disc (DVD), video compact disc (VCD), video cassette recorder (VCR), digital video camera, or computer. In this way, a user can record what they desire from any video source and conveniently playback the video data at any location.

Additionally, the portable audio video electronic device of the present invention provides a mobile audio or music to go storage and playback device. Music can be recorded and played back anytime and anywhere. Utilizing the standard audio inputs, music can be recorded from any audio device such as, for example, a stereo or a computer.

The mobile multimedia electronic device of the present invention also provides a digital photo album or wallet. Digital photos can be stored and viewed on the device. Also, photos can be easily transferred between the device, digital cameras and computers.

Furthermore, the portable multimedia electronic device provides a digital photograph and digital video recorder with a built-in camera. Digital images can be taken and viewed with the digital photo album feature. Video movies can be recorded, stored, and played back at any time with the built-in display or an external display. The camera features a digital zoom for both images and movies.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Figure 1 is a block diagram illustrating components of a portable multimedia device according to an embodiment of the present invention;
Figure 2 is a block diagram illustrating audio and video encoding decoding components of a portable multimedia device according to an embodiment of the present invention; and
Figure 3 is a block diagram illustrating input output interfaces of a portable multimedia device according to an embodiment of the present invention.

### DESCRIPTION OF THE ILLUSTRATIVE EMBODIMENTS

Reference will now be made in detail to the illustrative embodiments of the present invention, examples of which are illustrated in the accompanying drawings. Wherever possible, the same reference numbers are used in the drawings and the description to refer to the same or like parts.

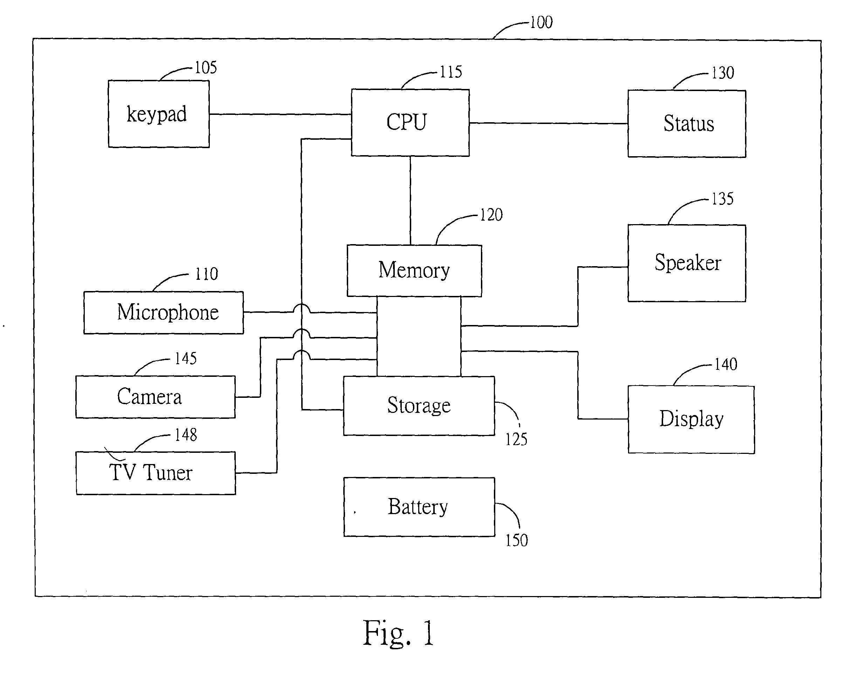

Refer to Figure 1, which is a block diagram illustrating components of a portable multimedia device according to an embodiment of the present invention.

The portable audio video or mobile multimedia electronic device 100 of the present invention comprises a central processing unit (CPU) 115 such as, for example, a TI TMS320DSC25 CPU.

The device also comprises a memory 120 comprising a flash memory and SDRAM memory. The flash memory is for example a 2 Mb flash memory. The SDRAM memory is, for example a 32 or 64 Mb SDRAM memory.

The CPU 115, memory 120, and firmware provide operating capabilities, functions, and an operating system for the device 100.

The portable audio video electronic device 100 further comprises a keypad 105 for controlling the device 100, status indicators 130 for indicating various status or conditions, a storage means 125 for storing data, a battery 150 for supplying rechargeable power, a built-in microphone 110 for receiving voice input, a built-in speaker 135 for providing audible sound and audio, a built-in display 140 for displaying video and images, a camera 145 for capturing digital images or video, and a TV tuner 148 for viewing TV or recording TV programming.

In some embodiments of the present invention, some components, for example, the built-in microphone 110 or the built-in speaker 135 are not included if not desired or in order to reduce cost.

The device further comprises audio video inputs, for example, standard RCA 3-in-1 AV inputs or s-video input. Utilizing these inputs, video can be recorded and stored from any video source such as, for example, TV, DVD, VCD, VCR, digital video camera, or computer. In this way, a user can record what they desire from any video source and conveniently playback the video data at any location. Additionally, via the audio inputs, music can be recorded from any audio device such as, for example, a stereo or a computer.

If a user prefers to utilize an external video display instead of the built-in display, the device can be connected to a standard television for viewing. The portable audio video electronic device provides standard audio and video outputs so that the device can be connected to any type of TV such as, for example, PAL, NTSC, or a SECAM type TV. Also, if the playback of only audio is desired, the audio outputs of the device can be connected to a stereo system.

The audio video outputs of the device comprise, for example, a standard RCA 3-in-1 AV output or s-video output. Furthermore, the output is user selectable so that the user can choose the appropriate output for the display type, such as PAL, NTSC, or SECAM.

Currently, there are three major television standards used throughout the world. PAL is an analog television standard that is commonly used in Europe and other areas, NTSC is used in America and Japan, and SECAM is used in some parts of Eastern Europe. Although the scan rate to form the video image and the color definitions between the standards are different, the user of the device can select the appropriate display type so that the multimedia can be conveniently viewed on any standard type of display regardless of type. This universal nature, whereby the device can be utilized anywhere in the world, is an advantage of the present invention.

For example, a business person traveling between America, Europe, and Asia can utilize a single device to display promotional material to customers. This not only saves money but ensures compatibility.

The device further comprises a TV tuner with an F-connecter input for cable input and an F-connector output for cable bypass. The TV tuner is an NTSC, PAL, SECAM, NTSC and PAL, or NTSC and PAL and SECAM tuner. As well as the output, the input mode is user selectable so that the user can choose the appropriate input for the cable or TV type, such as PAL, NTSC, or SECAM.

In use, the user simply connects the cable TV cable to the F-connector input and selects the appropriate input mode. Then the user selects the desired channel using the key pad or IR remote control. The TV programming is displayed on the built-in display or on an external display.

As with the audio video inputs, audio and video can be recorded from the TV tuner or data from the F-connector input. For example, after selecting the desired TV channel, the television programming can be recorded to the storage means. Additionally, with the real time clock feature, record times and channels can be preprogrammed for independent recording with or without a user being present at the time or recording.

The present invention further comprises a built-in video display. The video display is, for example, a 3.5" thin film transistor (TFT) liquid crystal display (LCD) display panel with white color back light. This allows the stored audio and video data to be playback anywhere without the need for an external display or TV. The resolution of the display is, for example 480 x 234. Alternatively, the built-in display is a 3.5" or 5.6" Cold Cathode Fluorescent Lamp (CCFL) LCD or a 3.5" LED LCD.

The portable audio video electronic device further comprises a storage means so that a user can store their favorite movies or music in the device. In an embodiment of the present invention the storage means comprises a hard disc drive (HDD), for example, a 2.5" ATA/IDE compatible hard disc drive. The hard disc drive is formatted with an FAT or FAT32 file system making it compatible with computer operating systems. Alternatively, the hard disc drive is a 1.8" IDE HDD which is small in size but more expensive, or a 3.5" IDE HDD which is inexpensive. Additional storage is provided by a memory card port where data can be stored on a removable memory card. The HDD comprises an ATA, IDE, or serial ATA (SATA) compatible hard disk drive.

In an embodiment of the present invention the hard disc drive is a removable hard disc drive. This enables the HDD of the device to be removed and installed into another compatible device such as a computer. This feature further increases the convenience of transferring large amounts of data easily.

A data interface such as a USB 2.0 or IEEE 1394 interface is included to ease transfer of data between the device, computers, and digital cameras. Since the hard disc drive is formatted with the FAT32 file system, the compatibility between the device and other devices is enhanced. Connecting the device to a computer via the USB interface allows files, or multimedia data to be transferred easily and conveniently between the devices. Also, the high speed nature of the interface allows for fast transfer of the data.

Additionally, the file system and the high speed interface allow the device of the present invention to be a portable mass storage device. Not only audio and video files, but large data files of any computer operating system compatible type can be transferred from a computer and stored on the device of the present invention. In this way, extremely large files that would not fit on a CD-Rom can be easily transferred to other locations without the need of moving a computer system.

As an example, the entire contents of a computer system's hard drive could be backed-up onto the device. The device can then be moved to another location and restored to a computer in a remote location. Therefore, the user no longer has to be concerned with missing files or data when working in a different location.

The device further comprises a power input, for example, a 12 volt direct current (DC) input. Alternating current (AC) power can be used via a 100-240 to DC adaptor. This allows a user to plug the device into a standard AC wall outlet to power the device. Since the AC to DC adaptor is a universal 100-240 volt AC adaptor, the device can be used anywhere in the world regardless of AC power type.

Additionally, the device further comprises a battery, for example, an 1840mA/3680mA 3.6 volt rechargeable lithium (LI) Ion battery. The battery allows the device to operate anywhere without the need for external power. For example, a user can watch stored movies during a long flight at their convenience or record data in a location without the need for extra power. Since the battery is rechargeable, it can be recharged at any convenient time. A battery monitor shows the current battery status or charge level which provides necessary information for users so that they know when recharging is required. The battery monitor can be a separate display, a status indicator such as an LED, or displayed on the built-in display.

Additionally, the device of the present invention comprises an automatic power-off feature. The power will turn off after an adjustable or user selectable length of time. For example, after a period of time with no input in the menu system, the power to the device will automatically turn off. This feature saves battery charge and battery life and reduces the frequency of recharging. The user can select the length of time to activate the power-off feature and to enable or disable this feature.

A key pad or buttons are provided for allowing operation control or setup properties and for navigating the menu system. The key pad comprises, for example, power on, mode select, stop, play, hold, pause, fast forward, track forward, fast rewind, track back, channel up, channel down, menu up, volume up, menu down, volume down, repeat, shuffle, and delete.

The power on key allows the user to turn the device on or off. The stop, play, pause, fast forward, track forward, fast rewind, track back, and hold allow the user to easily control the position of the media. The volume up and volume down keys allow the user to control the volume level of the audio. The menu up and down allow the user to scroll or move through the menu system. Repeat allows the media to continuously repeat until stop is pressed. Shuffle allows the play order of the media to be randomly accessed. Delete allows stored media to be deleted as desired.

In an embodiment of the present invention, the menu system is an on-screen display (OSD) menu system for controlling playback, recording, and setting up options and properties. Since the menu is displayed on the built-in display or external display, a user can easily navigate the menu and make the desired selection or choices or view the current status or properties.

In another embodiment of the present invention, the menu system is a graphic user interface (GUI). The GUI type system utilized in this embodiment provides a more professional user interface over the OSD type system. Additionally, the GUI type provides a user interface that is very user friendly. The various controlling or setting up operations are easily navigated to and performed. The GUI provides a familiar computer-type interface, for example an icon based system. A user is quickly able to navigate to the area of the system in order to perform the actions they desire. This allows a new user to quickly and effectively use the device.

In addition, the menu system provides localization features. Multiple languages are supported allowing the device to be used world-wide. For example, a user in the United States can select the English language and a Japanese user can select the Japanese language.

The device of the present invention further comprises an infrared interface and infrared remote control. The infrared remote control allows the user to control the device or navigate the menu system remotely, without using the key pad. This is particularly useful when utilizing the present invention as a presentation tool. The user can address the audience from a central location and control the device positioned in the back or side of the room.

In addition, the infrared port provides WLAN support for example 802.11g or 802.11b support. This provides remote sharing of media clips and better integration with computer systems. Data can be transferred or exchanged between the device of the present invention and other compatible devices, such as a computer, without having to be connected by a cable. This provides added convenience for the user.

A real time clock program is provided for scheduling recording of audio video data or battery recharge or backup. This feature allows a user to connect the device to a video source and set a time schedule for recording. As a result a user can conveniently record AV data at an inconvenient time without having to be present. Additionally, a user can set a schedule for battery recharging or backup, for example, while the user is sleeping.

The portable audio video electronic device of the present invention further comprises a status display. The status display is for example, an LED or a plurality of LED's. The status display comprises a power indicator, a high speed interface indicator, an encoding indicator, and a decoding indicator.

The power indicator shows when power is on. The high speed interface indicator shows when the device is connected to another device via the high speed interface such as the USB 2.0 interface. This allows the user to quickly determine that the devices are properly connected and reduces troubleshooting time if the devices don't communicate.

The encoding and decoding indicator(s) show when encoding or decoding is occurring or taking place. The encoding and decoding formats are, for example, MPEG4, MP3, and JPEG or other multimedia formats.

The portable audio video electronic device of the present invention further comprises multimedia support for a wide variety of multimedia formats.

For the audio portion of the device, an audio codec such as an MP3 codec is provided. Music or audio data recorded in the MP3 format can be playback by the device. The bit rate is adjustable from 32 to 320kbps. The sample frequency is selected from 32/44.1/48Khz. Since the MP3 format is a compressed format, many hours of audio data can be stored on the storage means and played back. In an embodiment of the present invention, a headphone or earphone output is provided to allow the user to listen to the audio data via headphones without the need for connection to a stereo system. Alternatively, in an embodiment of the present invention a built-in speaker is provided allowing multiple people to hear the audio which connecting the device to a stereo system.

Additionally, the audio capabilities of the device comprise a voice codec, for example a G.726 codec, and a built-in microphone. The G.726 recommendation was developed by the International Telegraph and Telephone Consultative Committee (CCITT) of the International Telecommunication Union (ITU). G.726 provides the principles and functional descriptions of adaptive differential pulse code modulation (ADPCM) encoding and decoding algorithms. As a result, a user can record their voice via the microphone and play back the audio on the device. The bit rate is selectable between 16/24/32/40Kbps.

The device of the present invention is capable of encoding and decoding a wide variety of audio formats. The device provides audio support including encoding and decoding of file formats such as MP3, G.726, AAC, WMA, RAM, and RM. MP3 is currently the most popular format world wide. G.726, while not a high quality format, is commonly used for voice recording and playback where high fidelity is not required. WMA is a MicroSoft Corp format, RAM and RM are RealNetworks formats, and AAC is an audio standard format.

A video codec, for example an MPEG4 codec is also provided for recording and playback of multimedia data. The frame rate is selectable from, for example, 23-30fps for both encoding and decoding. The bit rate is controllable from 100Kbps to 2.5Mbps. Video data can be controlled with record, play, pause, stop, fast forward, and fast reverse functions. The video size is, for example 640x480 or 320x240. With the video portion of the device, video files of various types, for example, MPG or AVI can be viewed.

The device of the present invention is capable of decoding and encoding multiple video formats. Video formats for decoding are, for example, MPEG-4, MPEG-1, MPEG-2, WMV, and DivX 5.0. Video formats for encoding are, for example, MEG-4, MPEG-1, MPEG-2, and WMV. Each of these formats have their advantages. For example, the MPEG-4 format provides a compressed file size that is good for Internet transferring. MPEG-1, and MPEG-2 formats are the most popular format in the entertainment industry allowing for a large amount of available content and are standard formats for VCD's and DVD's. The WMV format is a MicroSoft Corp. format.

In addition to these formats, the device provides support for MicroSoft Windows MediaPlayer formats and is able to play file formats such as AVI and ASF files.

An advantage of the present invention is a live signal display. When a user desires to record video from a video source device, the video is displayed on the built-in display or an external display. This provides the user with immediate feedback so the user will know that the video source data is coming into the device correctly. This also assures that the correct video data is recorded. The live signal display also acts as a preview so a user can cue up the video data to the correct or desired position before recording.

The device further comprises an image viewer. The image viewer allows a user to store digital photos in file formats such as JPEG, JPEG2000, M-JPEG, GIF, or BMP format and view them. JPEG format is a preferred format as it results in a good quality image with a very small file size. In this way, the user can create a photo wallet or photo album containing hundreds of thousands of pictures and view them with family or friends in other locations. The image viewer allows the images to be viewed in full screen or thumbnail format. Using the thumbnail format, a user can easily scroll through the images to find the desired photo. A zoom in and zoom out function provides the user with a means to see selected portions of the image or very fine details of the image.

The image viewer also comprises a slideshow. Images can be viewed in an automatic slideshow way without user intervention.

In an embodiment of the present invention, the device further comprises a CMOS or CCD camera or sensor. The camera allows a user to take still pictures or motion videos. In a camera mode, a user can utilize the device similar to a digital camera. The subject to be photographed is correctly positioned by viewing the subject with the built-in display. When positioned correctly, the user presses a capture or photograph key and the subject's digital photograph is taken. The key can be a dedicated key or a multi-function key on the key pad.

Furthermore, in a video mode, a user can utilize the device similar to a video camera. Once the subject is correctly positioned, the user presses a key to begin recording of the video. When recording is complete, the user presses the key again to stop recording.

A digital zoom is provided for use in camera and video modes. This feature allows a user to zoom in or zoom out in order to capture the subject at a desired magnification.

In an embodiment of the present invention, a memory card port is provided. The memory card port allows a user to store data or exchange data via a memory card such as a compact flash (CF) or secure digital (SD) card. For example, when using the camera, the digital photographs or video can be stored on the memory card. A user can then remove the card and utilize the stored data on another compatible device. The memory card port adds convenience for transferring or exchanging data between devices.

The flexible nature of the storage system of the device allows data to be easily transferred, exchanged or stored between the built-in hard disc drive and the removable memory card.

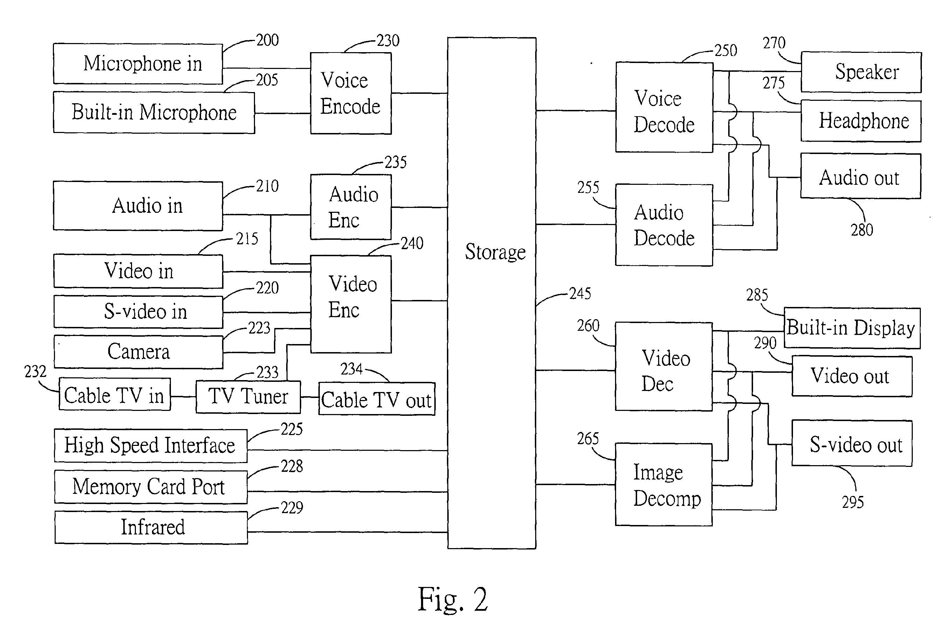

Refer to Figure 2, which is a block diagram illustrating audio and video encoding decoding components of a portable multimedia device according to an embodiment of the present invention.

Voice is recorded into the device via an external microphone connected to the microphone input 200 or via the built-in microphone 205. As the speaker talks, the voice signal is encoded by the voice encode codec 230 and stored in the storage 245. When a user desires to play back the recorded voice, the data is recalled from the storage 245 and decoded by the voice decode codec 250 and output via the built-in speaker 270, the headphone output 275, or the audio output 280.

Audio or music is recorded by connecting an external audio device such as a stereo system to the audio input 210. The audio signal is encoded by the audio encode codec 235 and stored in the storage 245. When a user desires to play back the audio data, the data is recalled from storage 245 and decoded by the audio decode codec 255 and output via the built-in speaker 270, the headphone output 275, or the audio output 280.

Video or a movie is recorded by connecting an external video device such as a DVD player to the video input 215 or the s-video input 220. Alternatively, video is recorded via the built-in camera 223. The video's audio is recorded by connecting to the audio input 210. The video (with audio) is encoded by the video encode codec 240 and stored in the storage 245. When a user desires to play back the video data, the data is recalled from storage 245 and decoded by the video decode codec 260 and output via the video ouput 290, the s-video output 295, or displayed on the built-in display 285. The audio portion of the video is output via the built-in speaker 270, the headphone output 275, or the audio output 280.

Additionally, television programming is recorded via the cable TV input 232 and the TV tuner 233. A cable TV out 234 or cable TV bypass provides a cable TV output for connecting to an external TV.

Images such as JPEG format images are stored in the storage 245 via a high speed interface 225 such as a USB 2.0 interface, or by the memory cart port 228. When a user desires to view the images, the images are recalled from storage 245 and decompressed by an image decompression codec 265 and output via the video ouput 290, the s-video output 295, or displayed on the built-in display 285.

The high speed interface 225 is also used for directly storing files or data to the storage device. For example, by connecting the device to a computer, instead of recording video via the video input 215, a video file is transferred to the storage 245 directly via the high speed interface 225. The video file is then viewed as previously described.

Additionally, data or files can be stored in the storage 245 via the high speed interface 225 and recalled via the high speed interface 225 at a later time or location. In this way the device acts as a portable storage medium.

Similar to the high speed interface 225, data can be transferred via the infrared port 229. This allows the device to wirelessly connect to another compatible device.

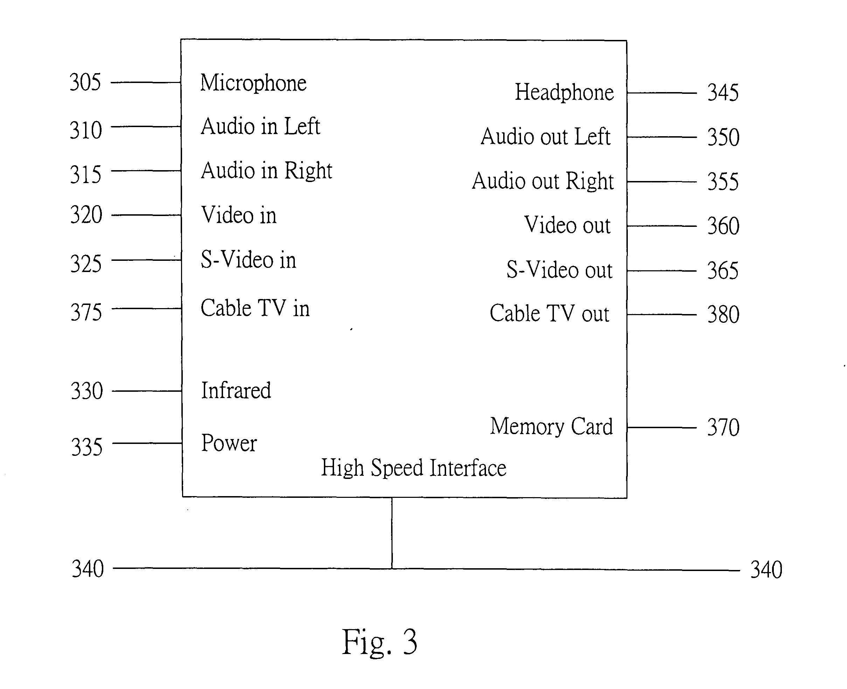

Refer to Figure 3, which is a block diagram illustrating input output interfaces of a portable multimedia device according to an embodiment of the present invention.

In summary, the device provides various inputs and outputs comprising; microphone input 305, audio left input 310, audio right input 315, video input 320, s-video input 325, infrared input 330, power supply input 335, headphone output 345, audio left out 350, audio right out 355, video out 360, s-video out 365, memory card port 370, a cable TV in 375, a cable TV out 380, and a bi-directional high speed interface 340.

Note that in some embodiments of the present invention, all, some, or a combination of these inputs and outputs are provided. The device of the present invention is tailored to suit depending upon needs or requirements. For example, in an embodiment of the present invention the s-video input and output are not provided. As a result, video is recorded via the video input or cable TV input.

The portable multimedia device of the present invention provides numerous advantages over conventional devices. With the mobile video or cinema to go, it is extremely easy to watch movies on the go or in any location at any time. Movies can be recorded and stored and viewed on the high resolution built-in display. Video data can be recorded from any video source such as, TV, DVD, VCD, VCR, or digital video camera. With the hard drive, hours and hours of video can be stored and played back on the device.

Additionally, with the built-in camera, digital images or video can be recorded by the device. This eliminates the need for having separate devices such as a digital camera or digital video recorder.

With the built-in TV tuner, connecting the device to a cable TV cable allows users to watch and record television programming.

In addition to the mobile video features, audio such as music or spoken word can be stored and played back at any place or any time. Huge libraries of audio data can be stored and enjoyed in a mobile fashion. A user can listen to the audio over headphones or connect the device to an external stereo system.

Digital images or photos can be stored on the device. The images can be shared with a user's family or friends. Additionally, photos can easily be transferred among digital cameras, computers, and the present invention via a high speed interface such as a USB 2.0 interface. This allows for easy storage of a mass quantity of digital photos without requiring the user to purchase more memory cards for their cameras.

Furthermore, the stored multimedia data can be viewed on an external display. The device can be connected to any type of TV with a standard audio and video cable. In this way, a user can record the data and conveniently play the data back at a remote location such as their friend's home.

It will be apparent to those skilled in the art that various modifications and variations can be made to the present invention without departing from the scope or spirit of the invention. In view of the foregoing, it is intended that the present invention cover modifications and variations of this invention provided they fall within the scope of the invention and its equivalent.

## Claims

1. A portable multimedia electronic device comprising:
a video recording means for recording video from an external video source;
an audio recording means for recording audio from an external audio source;
a video playback means for playing back video;
an audio playback means playing back audio;
an image viewer for recalling images;
a built-in display for displaying video or images;
a rechargeable battery for supplying power;
a keypad for controlling operation;
at least one status indicator for indicating status; and
a storage means for providing data storage.

2. The portable multimedia electronic device of claim 1, further comprising:
a microphone input, an audio left input, an audio right input, a video input, an s-video input, an infrared port, a power supply input, a headphone output, an audio left output, an audio right output, a video output, an s-video out, a bi-directional high speed interface, a cable television input, a cable television output, and a memory card port, or a combination of these.

3. The portable multimedia electronic device of claim 2, whereby operation of the device is controlled by a remote control via the infrared port.

4. The portable multimedia electronic device of claim 1, further comprising:
a central processing unit, a flash memory, a dynamic random access memory, and firmware for providing operating capabilities, functions, and an operating system

5. The portable multimedia electronic device of claim 1. further comprising:
a built-in microphone for recording voice.

6. The portable multimedia electronic device of claim 1, further comprising:
a built-in speaker for playing back audio or voice.

7. The portable multimedia electronic device of claim 1, further comprising:
a switch for selecting between phase alternation line (PAL), national television systems committee (NTSC), or sequential couleur avec memoire (SECAM) video types.

8. The portable multimedia electronic device of claim 1, further comprising:
a real time clock program for scheduling recording of data, battery recharging, or backup schedules.

9. The portable multimedia electronic device of claim 1, further comprising:
an on-screen display (OSD) or graphic user interface (GUI) menu system for displaying playback and recording controls, and for displaying settings, options, parameters, and properties.

10. The portable multimedia electronic device of claim 1, whereby the keypad comprises controls for, power on, power off, mode select, stop, play, hold, pause, fast forward, track forward, fast rewind, track back, menu up, volume up, menu down, volume down, channel up, channel down, zoom in, and zoom out, or a combination of these.

11. The portable multimedia electronic device of claim 1, whereby the at least one status indicator comprises a power indicator, a high speed interface indicator, an encoding indicator, a decoding indicator, a battery level monitor, or a combination of these.

12. The portable multimedia electronic device of claim 1, whereby the storage means comprises an advanced technology attachment (ATA), an integrated drive electronics (IDE), or a serial advanced technology attachment (SATA) compatible hard disc drive.

13. The portable multimedia electronic device of claim 1, whereby the built-in display comprises a liquid crystal display (LCD) display panel.

14. The portable multimedia electronic device of claim 2, whereby the bi-directional high speed interface comprises a universal serial bus (USB), USB 2, or IEEE 1394 interface.

15. The portable multimedia electronic device of claim 1, further comprising codecs for encoding or decoding voice, audio, images, or video.

16. The portable multimedia electronic device of claim 1, whereby multimedia support is provided for MPEG-1, MPEG-2, MPEG-4, AVI, DivX, ASF, WMV, WMA, AAC, MP3, G.726, JPEG, JPEG2000, M-JPEG, GIF, and BMP formats.

17. The portable multimedia electronic device of claim 1, whereby the device records audio or video from an external audio or video source connected to the audio or video recording means.

18. The portable multimedia electronic device of claim 1, further comprising a camera for taking digital photographs or recording video.

19. The portable multimedia electronic device of claim 1, further comprising a television tuner, whereby television programming is recordable via the video recording means.

20. A portable multimedia electronic device comprising:
a central processing unit, a flash memory, a dynamic random access memory, and firmware for providing operating capabilities, functions, and an operating system for the device;
a television tuner for providing television programming tuning;
a video recording means for recording video from an external video source or from the television tuner;
an audio recording means for recording audio from an external audio source;
a voice recording means for recording voice;
a camera for taking digital photographs or recording video;
a video playback means for playing back video;
an audio playback means playing back audio and voice;
an image viewer for recalling images;
a plurality of inputs and outputs comprising a microphone input, an audio left input, an audio right input, a video input, an s-video input, an infrared port, a power supply input, a headphone output, an audio left output, an audio right output, a video output, an s-video out, a cable television input, a cable television output, a bi-directional high speed interface, a memory card port, or a combination of these;
a built-in display for displaying television, video or images;
a rechargeable battery for supplying power;
a keypad for controlling operation comprising controls for, power on, power off, mode select, stop, play, hold, pause, fast forward, track forward, fast rewind, track back, channel up, channel down, menu up, volume up, menu down, volume down, zoom in, zoom out, or a combination of these;
at least one status indicator for indicating status comprises a power indicator, a high speed interface indicator, an encoding indicator, a decoding indicator, a battery level monitor, or a combination of these; and
an advanced technology attachment (ATA), serial advanced technology attachment (SATA), or integrated drive electronics (IDE) compatible hard disc drive for providing data storage.

21. The portable multimedia electronic device of claim 20, whereby operation of the device is controlled by a remote control via the infrared port.

22. The portable multimedia electronic device of claim 20, further comprising:
a built-in microphone for recording voice.

23. The portable multimedia electronic device of claim 20, further comprising:
a built-in speaker for playing back audio or voice.

24. The portable multimedia electronic device of claim 20, further comprising:
a switch for selecting between phase alternation line (PAL), national television systems committee (NTSC), or sequential couleur avec memoire (SECAM) video types.

25. The portable multimedia electronic device of claim 20, further comprising:
a real time clock program for scheduling recording of data, battery recharging, or backup schedules.

26. The portable multimedia electronic device of claim 20, further comprising:
an on-screen display (OSD) or graphic user interface (GUI) menu system for displaying playback and recording controls, and for displaying settings, options, parameters, and properties.

27. The portable multimedia electronic device of claim 20, whereby the built-in display comprises a liquid crystal display (LCD) display panel.

28. The portable multimedia electronic device of claim 20, whereby the bi-directional high speed interface comprises a universal serial bus (USB), USB 2, or IEEE 1394 interface.

29. The portable multimedia electronic device of claim 20, further comprising codecs for encoding or decoding voice, audio, images, or video.

30. The portable multimedia electronic device of claim 20, whereby multimedia support is provided for MPEG-1, MPEG-2, MPEG-4, AVI, DivX, ASF, WMV, WMA, AAC, MP3, G.726, JPEG, JPEG2000, M-JPEG, GIF, and BMP formats.

31. The portable multimedia electronic device of claim 20, whereby the device records audio or video from an external audio or video source connected to the audio or video recording means or from the television tuner.
